# EUROPÄISCHE PATENTSCHRIFT

(11) **EP 2 697 015 B1**
(45) Veröffentlichungstag und Bekanntmachung des Hinweises auf die Patenterteilung: **18.03.2015**
(21) Anmeldenummer: 12715593.5
(22) Anmeldetag: 05.04.2012
(51) Int. Cl.: B23P 15/00, B23P 15/18, F16D 55/02

(54) **VERFAHREN ZUM HERSTELLEN EINES BREMSTRÄGERS FÜR EINE SCHEIBENBREMSE UND BREMSTRÄGER FÜR EINE SCHEIBENBREMSE**
METHOD FOR PRODUCING A BRAKE CARRIER FOR A DISC BRAKE AND BRAKE CARRIER FOR A DISC BRAKE
PROCÉDÉ DE FABRICATION D'UN FLASQUE DE FREIN POUR UN FREIN À DISQUE ET FLASQUE DE FREIN POUR UN FREIN À DISQUE

(30) Priorität: 13.04.2011 DE 102011016928
(43) Veröffentlichungstag der Anmeldung: 19.02.2014
(73) Patentinhaber: Lucas Automotive GmbH, 56070 Koblenz (DE)
(72) Erfinder: ZENZEN, Guido, 56290 Macken (DE); BECKER, Marco, 56651 Oberdürenbach (DE); RÖSSINGER, Florian, 56566 Neuwied (DE); BECKER, Jochen, 56567 Neuwied (DE); SEUSER, Sabine, 56566 Neuwied (DE); SEUSER, Christoph, 56566 Neuwied (DE); SEUSER, Martin, 56566 Neuwied (DE); BAYER, Christina, 56566 Neuwied (DE)
(74) Vertreter: Thum, Bernhard
(86) Internationale Anmeldenummer: PCT/EP2012/001526
(87) Internationale Veröffentlichungsnummer: WO 2012/139738

(56) Entgegenhaltungen:
- WO-A1-2006/042697
- DE-A1- 4 126 194
- DE-A1- 4 318 749
- DE-A1-102004 002 571

## Beschreibung

Die vorliegende Erfindung betrifft ein Verfahren zum Herstellen eines Bremsträgers für eine Scheibenbremse einer Fahrzeugbremsanlage, wobei der Bremsträger wenigstens einen Führungsschacht zum Führen eines Bremsbelags in einer Führungsrichtung relativ zu einem Aufnahmebereich für eine Bremsscheibe aufweist, wobei das Verfahren die Schritte des Herstellens eines Bremsträgerrohlings in einem Gießschritt und des Nachbearbeitens des Bremsträgerrohlings durch Abtragen von Material zum Herstellen des wenigstens einen Führungsschachts umfasst. Die vorliegende Erfindung betrifft weiter einen Bremsträger sowie eine Scheibenbremse, die einen solchen Bremsträger aufweist.

Derartige Bremsträger in Scheibenbremsen sind aus dem Stand der Technik bekannt. So wird bei herkömmlichen Bremsträgern in einem Bearbeitungsschritt zuerst der Führungsschacht ausgebildet und anschließend, in einem darauffolgenden Bearbeitungsschritt, der Aufnahmebereich für die Bremsscheibe bearbeitet, um einen sogenannten Scheibenfreigang auf ein vorbestimmtes Maß zu bringen. Das Ausbilden des Führungsschachts erfolgt regelmäßig durch einen spanabtragenden Bearbeitungsschritt, in dem beispielsweise mittels eines Fräswerkzeugs quer zum Aufnahmebereich der Bremsscheibe Material von dem Gussrohling abgetragen wird. Die lichte Weite des Aufnahmebereichs für die Bremsscheibe, die den Scheibenfreigang für eine Bremsscheibe definiert, d.h. der Abstand von einer Seite des Bremsträgers zu der über den Aufnahmebereich der Bremsscheibe hinweg gegenüberliegenden Seite des Bremsträgers, erfolgt ebenfalls in einem zusätzlichen spanabtragenden Bearbeitungsschritt. Ein Fräswerkzeug wird dabei in dem Aufnahmebereich entlang des Innenbereichs des Bremsträgers bewegt. Der Scheibenfreigang gibt einen Abstand von einer Seite des Bremsträgers bzw. der Wand des Bremsträgers zu der gegenüberliegenden Seitenfläche der Bremsscheibe an. Der Scheibenfreigang muss so gewählt werden, dass im Betrieb eine rotierende Bremsscheibe, die in den Innenbereich des Bremsträgers hineinragt, unter allen Funktionsbedingungen den Bremsträger nicht berührt.

Insbesondere muss einem sogenannten Scheibenschlag und einem seitlichen Verzug der Bremsscheibe bei hoher Wärmebelastung, der sogenannten Schirmung, Rechnung getragen werden und dementsprechend Freiräume (Scheibenfreigang) am Bremsträger geschaffen werden. Weiterhin muss dieser Scheibenfreigang immer klein genug sein, damit zum Beispiel im Fall einer vollständigen Abnutzung des eigentlichen Reibbelags der Bremsbeläge ein Hineinrutschen der Bremsbeläge in den Scheibenfreigang während einer Bremsung verhindert wird, da dies zum Totalausfall der Bremse führen würde. Dies bedeutet, dass der Scheibenfreigang kleiner als die Dicke einer Rückenplatte für Bremsbeläge sein sollte. Sicherheitshalber darf sogar ein 10%iger Verschleiß der metallischen Rückenplatte der Bremsbeläge noch nicht zu einem solchen Hineinrutschen führen.

Da der Scheibenfreigang beim Stand der Technik durch eine zusätzliche maschinelle Bearbeitung nach dem Herstellen eines Bremsträgers als Rohgussteil und nach dem Einbringen der Führungsschächte eingestellt wird, ergeben sich aus fertigungstechnischer Sicht Nachteile. Die zusätzliche Bearbeitung des Aufnahmebereichs für die Bremsscheibe zum Festlegen des Scheibenfreigangs ist deswegen nachteilig, da jede zusätzliche Bearbeitung neben einer längeren Bearbeitungszeit auch die Fertigungskosten erhöht.

In dem Dokument DE 41 26 194 A1 wird eine Festsattelbremse mit einer Bremsscheibe offenbart, bei welcher zur Vereinfachung der Bearbeitung Abstützflächen für die Bremsbeläge in einem Fräsarbeitsgang bearbeitet werden. Dabei kann zusätzlich der Scheibenfreigang in diesem Arbeitsgang festgelegt werden, da die Abstützflächen in den Innenraum des Bremsträgers hineinragen und der Abstand zwischen zwei sich über den Innenraum hinweg gegenüberliegenden Abstützflächen die lichte Weite definiert. Bei einer Übertragung der Lehre aus Dokument DE 41 26 194 A1 auf einen an einem Bremsträger schwimmend gelagerten Bremssattel müssen aber zusätzlich Führungsschächte vorgesehen werden, so dass ein weiterer Bearbeitungsschritt erforderlich ist, wie eingangs beschrieben.

Es ist Aufgabe der vorliegenden Erfindung, ein Verfahren zum Herstellen eines Bremsträgers für eine Scheibenbremse der eingangs genannten Art anzugeben, das weniger Zeit- und Kostenaufwand erfordert als der Stand der Technik. Zudem ist es Aufgabe, einen unter geringerem Zeit- und Kostenaufwand herstellbaren Bremsträger für eine Scheibenbremse und eine Scheibenbremse für eine Fahrzeugbremsanlage anzugeben.

Diese Aufgabe wird durch ein Verfahren zum Herstellen eines Bremsträgers für eine Scheibenbremse mit den eingangs bezeichneten Merkmalen gelöst, wobei der Bremsträgerrohling in dem Gießschritt in dem Bereich, in dem der Führungsschacht ausgebildet wird, mit zwei konvergierenden, dem Aufnahmebereich zugewandten Formschrägen ausgebildet wird, und beim Nachbearbeiten zum Herstellen des wenigstens einen Führungsschachts Material im Bereich der Formschrägen abgetragen wird, so dass der Aufnahmebereich für die Bremsscheibe eine vorbestimmte lichte Weite quer zur Führungsrichtung aufweist. Erfindungsgemäß wird in einem einzigen Bearbeitungsschritt der Führungsschacht zum Führen eines Bremsbelags in der Führungsrichtung relativ zu einem Aufnahmebereich für eine Bremsscheibe gebildet und zugleich die vorbestimme lichte Weite in dem Aufnahmebereich für die Bremsscheibe quer zur Führungsrichtung dimensioniert.

Durch die zwei konvergierenden, konvex dem Aufnahmebereich zugewandten Formschrägen ist es möglich, in Abhängigkeit von der Lage des Führungsschachts und/oder der Ausgestaltung der zwei konvergierenden, dem Aufnahmebereich zugewandten Formschrägen verschiedene Weiten des Aufnahmebereichs zu erzielen. Dadurch können lichte Weiten des Aufnahmebereichs bedarfsweise für verschiedene Bremsscheiben gefertigt werden. Außerdem kann auch eine vorbestimmte lichte Weite bei verschiedenen Lagen des Führungsschachts durch eine angepasste Gestaltung der konvergierenden Formschrägen erreicht werden. Durch ein solches Verfahren entfällt der im Zusammenhang mit dem Stand der Technik beschriebene Bearbeitungsschritt beim Herstellen von Bremsträgern, wodurch die Bearbeitungszeit verkürzt wird und Fertigungskosten eingespart werden können. Ferner entfallen weitere Bearbeitungsschritte wie das Umspannen des Bremsträgers sowie die anschließende seitliche Zerspanung zur Herstellung der lichten Weite bzw. des Scheibenfreigangs.

In dem Gießschritt kann eine zumindest zweiteilige Gussform verwendet werden, deren Formhälften in einer Formteilungsebene aneinander liegen, wobei die Formteilungsebene in dem Bereich positioniert ist, in dem am Bremsträger der wenigstens eine Führungsschacht ausgebildet wird. Durch das Verwenden einer zumindest zweiteiligen Gussform und die Positionierung der Formteilungsebene in dem Bereich, in dem am Bremsträger der wenigstens eine Führungsschacht ausgebildet wird, wird die Bildung von konvergierenden, dem Aufnahmebereich konvex zugewandten Formschrägen vereinfacht, wobei die Formschrägen dadurch vielfältige Formen aufweisen können. Zudem können die Formschrägen "wulstartig" oder "bauchig" ausgestaltet sein, sowie auch eckige, mehr oder weniger spitz zulaufende Formen aufweisen.

Die Formteilungsebene kann im Wesentlichen mittig durch den Bereich verlaufen, in dem am Bremsträger der wenigstens eine Führungsschacht ausgebildet wird. Beidseits der Formteilungsebene kann jeweils eine Formschräge angeordnet sein, so dass jede der zumindest zwei Formhälften eine Formschräge ausbildet, wodurch das Herstellen des Bremsträgerrohlings in dem Gießschritt, insbesondere das Ausformen des Rohlings, vereinfacht wird.

Die Formschrägen können im Wesentlichen denselben relativen Neigungswinkel bezüglich der Formteilungsebene aufweisen, so dass auch hierdurch die Herstellung des Bremsträgerrohlings in dem Gießschritt vereinfacht wird und auch die Position bzw. Lage des Führungsschacht variabel sein kann. Durch denselben relativen Neigungswinkel bezüglich der Formteilungsebene ergibt sich eine symmetrische Ausgestaltung der Formteilungsebenen. Dabei kann vorgesehen sein, dass nach dem Abtragen von Material im Bereich des Führungsschachts, von dem Übergang des Führungsschachts in den Aufnahmebereich hinein, beidseits des Führungsschachts die verbleibenden, nicht abgetragenen Abschnitte der Formschrägen im Wesentlichen gleich weit in den Führungsschacht hineinragen.

Die Formschrägen können aber auch unterschiedliche relative Neigungswinkel bezüglich der Formteilungsebene aufweisen, wodurch je nach Position bzw. Lage des Führungsschachts verschiedene Weiten des Aufnahmebereichs für die Bremsscheibe erzielt werden können.

Der Bremsträgerrohling kann aus Aluminium, einer Aluminiumlegierung oder aus Sphärogussmaterial hergestellt werden.

Das Abtragen von Material zum Herstellen des wenigstens einen Führungsschachts kann in einem spanabhebenden Bearbeitungsschritt erfolgen. Vorzugsweise erfolgt der spanabhebende Bearbeitungsschritt durch Fräsen. Es können aber auch andere spanabtragende Bearbeitungsverfahren zum Einsatz kommen, wie etwa Räumen oder Schleifen.

Das Abtragen von Material kann vorzugsweise lediglich in Führungsrichtung erfolgen, wobei die Herstellung des Bremsträgers wesentlich vereinfacht und Kosten reduziert werden.

Die Erfindung betrifft ferner einen Bremsträger für eine Scheibenbremse einer Fahrzeugbremsanlage, hergestellt nach einem Verfahren der vorstehend beschriebenen Art, wobei der Bremsträger wenigstens einen Führungsschacht zum Führen eines Bremsbelags in einer Führungsrichtung relativ zu einem Aufnahmebereich für eine Bremsscheibe aufweist und wobei der Bremsträger aus einem in einem Gießschritt hergestellten Bremsträgerrohling besteht, dessen wenigstens ein Führungsschacht durch Abtragen von Material des Bremsträgerrohlings hergestellt ist. Der Bremsträgerrohling weist in dem Bereich, in dem der Führungsschacht ausgebildet wird, zwei konvergierende, dem Aufnahmebereich vorzugsweise konvex zugewandte Formschrägen auf, die nach dem Herstellen des wenigstens einen Führungsschachts den Aufnahmebereich für die Bremsscheiben in einer vorbestimmten lichten Weite quer zur Führungsrichtung definieren. Ein solcher Bremsträger ist in der Herstellung im Vergleich zu Bremsträgern des Stands der Technik kostengünstiger, weil er mit weniger Arbeitsschritten und daher in einer kürzeren Bearbeitungszeit hergestellt werden kann.

Ein solcher Bremsträger weist zumindest einen Führungsschacht auf, welcher aus zwei konvergierenden, dem Aufnahmebereich zugewandten Formschrägen gebildet ist, und welcher aufgrund dieser Formschrägen bei Abweichungen der Weite in dem Aufnahmebereich für die Bremsscheibe zusätzlich bearbeitet werden kann.

Vorteilhafterweise weist eine Scheibenbremse für eine Fahrzeugbremsanlage einen solchen Bremsträger auf. Dadurch ergibt sich ein kostengünstigeres Bremssystem, welches zudem die oben genannten Vorteile aufweist.

Jede Vereinfachung des Verfahrens zum Herstellen des Bremsträgers der eingangs genannten Art bewirkt eine Zeitersparnis und reduziert die Kosten bei der Herstellung von Bremsträgern in großen Stückzahlen. Ebenso ist es möglich, durch die verschiedenen Ausgestaltungen der Formschrägen entsprechende lichte Weiten und daher auch verschiedene oder angepasste Scheibenfreigänge für eine Vielzahl von Bremsscheiben zu fertigen.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren gezeigten Komponenten sind hierbei nicht unbedingt maßstäblich. Sie können bei zu implementierenden Ausführungsformen vom Veranschaulichten abweichen.

Im Folgenden wird die Erfindung beispielhaft anhand der beiliegenden Figuren erläutert. Dabei stellen dar:
- Fig. 1: einen Bremsträger mit in Führungsschächten angeordneten Bremsbelägen in einer perspektivischen Darstellung;
- Fig. 2: den Bremsträger gemäß Fig. 1 ohne Bremsbeläge mit ausgebildeten Führungsschächten in einer perspektivischen Darstellung;
- Fig. 3: einen Bremsträgerrohling nach der Gussherstellung mit konvergierenden, dem Aufnahmebereich zugewandten Formschrägen in einer perspektivischen Darstellung;
- Fig. 4a: eine Seitenansicht eines Bremsträgerrohlings;
- Fig. 4b: eine Schnittansicht des Bremsträgerrohlings aus Fig. 4a mit zwei konvergierenden, dem Aufnahmebereich zugewandten Formschrägen; und
- Fig. 5: eine Schnittansicht eines Bremsträgers mit zwei Führungsschächten und eine im Aufnahmebereich angeordnete Bremsscheibe.

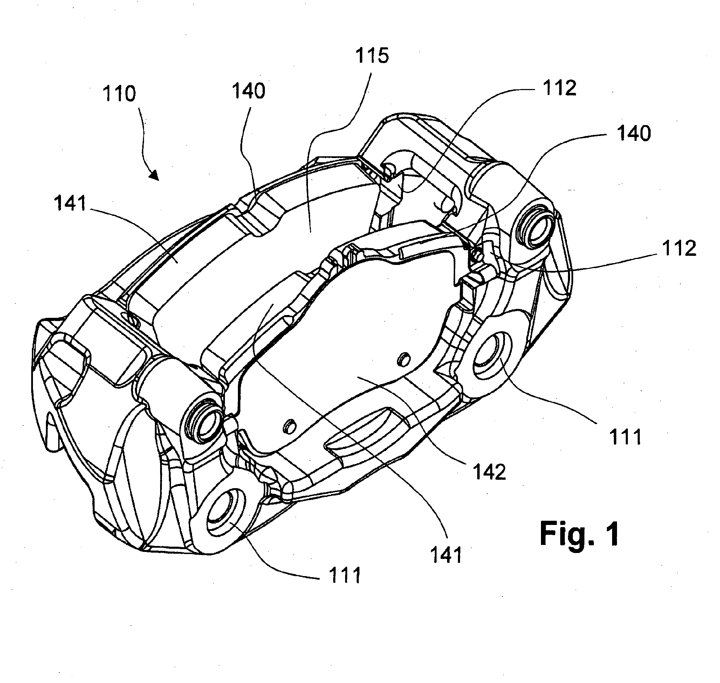

Fig. 1 zeigt einen Bremsträger 110 mit zwei in Führungsschächten 112 geführten Bremsbelägen 140. Die Bremsbeläge 140 weisen einen Reibbelag 141 auf, der auf einer Rückenplatte 142 aufgebracht ist. Der Bremsträger 110 weist Befestigungsöffnungen 111 auf, über die der Bremsträger 110 fest mit einem Teil eines Fahrzeugs verbunden werden kann. Die Anbringung des Bremsträgers 110 über die Befestigungsöffnungen 111 kann dabei über eine Schraubverbindung erfolgen. Der Bremsträger 110 weist in dieser Ausführungsform insgesamt vier Führungsschächte 112 auf, in denen die Bremsbeläge 140 über vorstehende Zungen der Rückenplatte 142 geführt werden, wobei in Fig. 1 lediglich zwei der vier Führungsschächte 112 zu sehen sind.

In den Führungsschächten 112 können die Bremsbeläge 140 bei Betätigung der Bremse in Richtung zu einem Innenbereich 115 gedrückt werden, so dass die Bremsbeläge 140 in Eingriff mit einer in Fig. 1 nicht dargestellten Bremsscheibe 150 gebracht werden. Der Innenbereich 115 umfasst den Aufnahmebereich für die Bremsscheibe 150, in den die Führungsschächte 112 münden. Die Bremsscheibe 150 ist zwischen den beiden Bremsbelägen 140 in dem Aufnahmebereich um einen Drehpunkt gelagert, der in Fig. 1 nicht dargestellt und unterhalb des in Fig. 1 dargestellten Bremsträgers 110 liegt.

Der Bremsträger 110 entspricht in weiten Teilen der Form und Ausgestaltung eines herkömmlichen Bremsträgers. Daher wird darauf verzichtet, sämtliche Bestandteile und Gestaltungsmerkmale des Bremsträgers 110, sowie die Bestandteile einer Scheibenbremse und einer Bremsanlage eines Fahrzeugs zu beschreiben. Vielmehr konzentriert sich die nachfolgende Beschreibung auf die erfindungswesentlichen Merkmale.

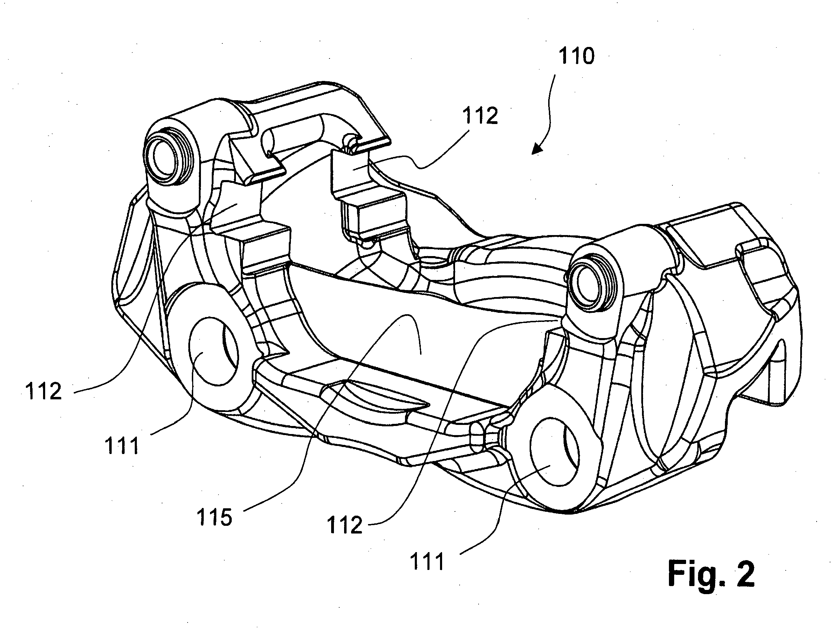

Fig. 2 zeigt einen Bremsträger 110 mit Führungsschächten 112, wobei in Fig. 2 lediglich drei der insgesamt vier Führungsschächte 112 zu sehen sind. Die Führungsschächte 112 sind über den Innenbereich 115 bzw. den Aufnahmebereich der Bremsscheibe 150 gegenüberliegend, also paarweise fluchtend angeordnet. Die Führungsschächte 112 werden beispielsweise durch Fräsen oder anderweitige spanabhebende Bearbeitung quer zur Richtung der Längsrichtung des Bremsträgers 110 gefertigt. Dabei können die jeweils gegenüberliegenden Führungsschächte 112 wegen ihrer fluchtenden Ausrichtung in einem Bearbeitungsschritt gefertigt werden, wobei beispielsweise der Materialabtrag durch Bewegen eines Fräswerkzeugs quer zum Aufnahmebereich der Bremsscheibe 150 über die gesamte Breite des Bremsträgers 110 hinweg erfolgt.

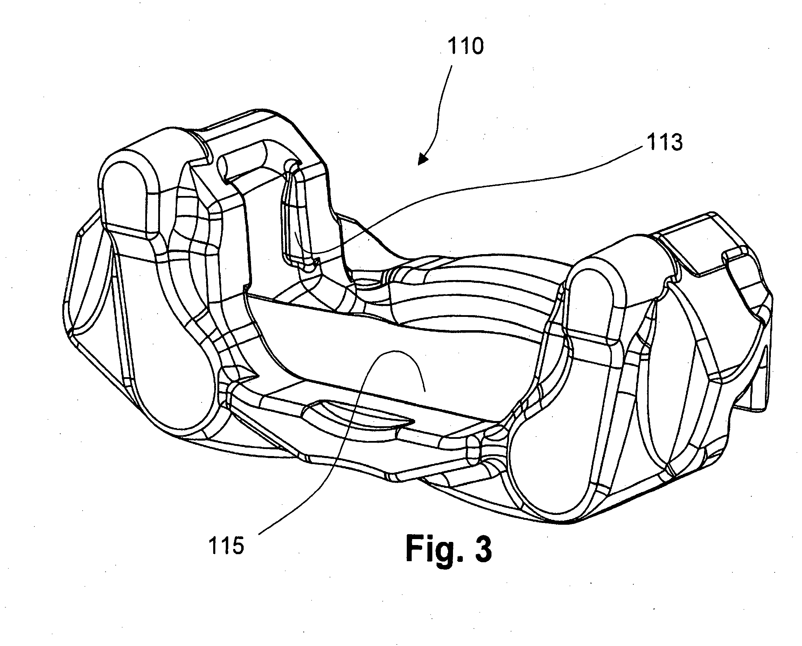

Fig. 3 zeigt einen Bremsträgerrohling nach der Herstellung in einem Gießschritt, bei dem ein Bereich 113 mit Formschrägen S zu sehen ist. Der Bremsträgerrohling ist aus Aluminium gefertigt. Der in Fig. 3 dargestellte Bremsträgerrohling weist noch keine Führungsschächte 112 sowie keine Befestigungsöffnungen 111 auf. Diese werden in späteren Bearbeitungsschritten in den Bremsträgerrohling eingebracht.

Der Bereich 113 weist einen wulstartigen Abschnitt mit zwei konvergierenden, dem Aufnahmebereich konvex zugewandte Formschrägen S auf, der sich in den Innenbereich 115 des Bremsträgerrohlings bzw. in den Aufnahmebereich für die Bremsscheibe 150 hinein erstreckt und sich in der Zeichnung, ausgehend von der Mitte sowohl nach oben und unten, als auch nach links und rechts verjüngt. Der Bremsträgerrohling aus Fig. 3 weist also vier Bereiche 113 mit Formschrägen S auf, die sich jeweils gegenüberliegen und in den Innenbereich 115 des Bremsträgerrohlings bzw. in den Aufnahmebereich für die Bremsscheibe 150 hineinragen.

Die Formschrägen S können verschiedene Formen aufweisen, wobei im Rahmen der Herstellung während des Gießschrittes verwendete Formhälften A und B oder andere Formteile, welche die Form des Bremsträgerrohlings vorgeben, so ausgebildet sein können, dass eine Vielzahl von verschiedenen Bereichen 113 mit zwei konvergierenden, dem Aufnahmebereich für die Bremsscheibe 150 zugewandten Formschrägen S gebildet werden.

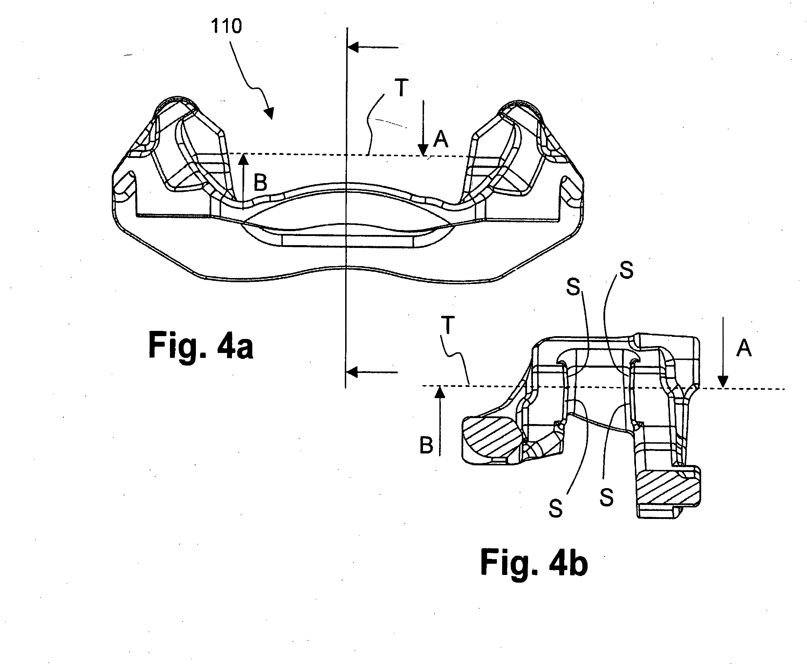

Fig. 4a zeigt eine Seitenansicht eines Bremsträgerrohlings. In Fig. 4a ist eine Formteilungsebene T gestrichelt eingezeichnet. Des weiteren wird in Fig. 4a gezeigt, wie die beiden Formhälften A und B in der Formteilungsebene T aneinander liegen. Die Formhälften A und B sind jedoch nicht im Detail dargestellt.

Es ist alternativ aber auch möglich, die Formteilungsebene T parallel zu der in Fig. 4a dargestellten Formteilungsebene T zu verschieben oder/und um einen gewissen Betrag um eine Drehachse senkrecht zur Zeichenebene zu drehen. Die Drehachse kann sich sowohl innerhalb des Bremsträgerrohlings als auch außerhalb des Bremsträgerrohlings befinden. Es können aber auch mehrere Formteile verwendet werden, wodurch die Gestaltungsmöglichkeiten hinsichtlich der Formschrägen S vervielfältigt werden.

In Fig. 4a ist auch ein Schnitt durch den Bremsträgerrohling als durchgezogene Linie dargestellt. Fig. 4b zeigt die entsprechende Schnittansicht des Bremsträgerrohlings aus Fig. 4a. Die Formteilungsebene T ist wiederum gestrichelt eingezeichnet und zeigt den Bereich an, in welchem die zwei Formhälften A und B während der Durchführung des Gießschritts aneinander liegen, um den Bremsträgerrohling zu bilden. In der Schnittansicht von Fig. 4b wird gezeigt, wie die Formteilungsebene T durch den Bereich 113 mit den Formschrägen S in dem Aufnahmebereich für die Bremsscheibe 150 verläuft.

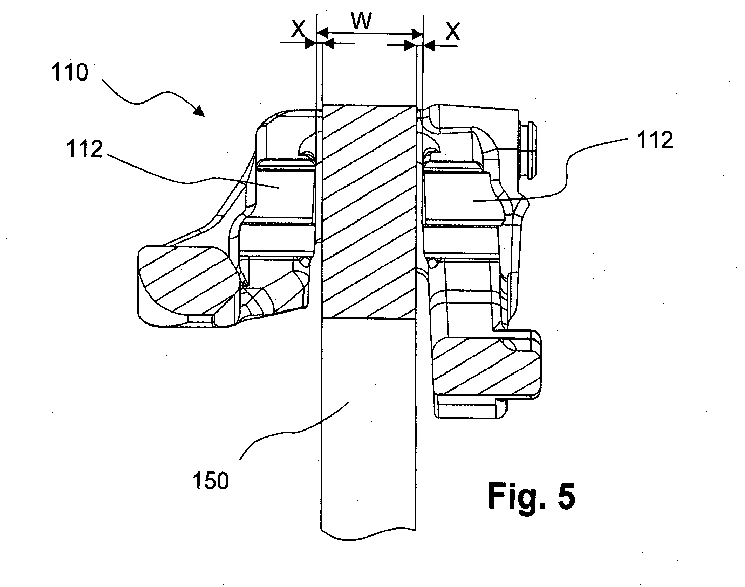

Fig. 5 zeigt eine Schnittansicht eines Bremsträgers 110, nachdem die Führungsschächte 112 in dem Bremsträger 110 eingebracht worden sind. Des weiteren ist eine Bremsscheibe 150 in dem Aufnahmebereich dargestellt, welche von den Bereichen 113 der Formschrägen S auf beiden Seiten mit einem Abstand X von diesen entfernt ist. Der Abstand X bezeichnet den sogenannten Scheibenfreigang für die Bremsscheibe 150. Die Führungsschächte 112 werden durch Abtragen von Material erzeugt, wobei durch den Materialabtrag ebenfalls ein Teil der im Rohling vorgesehenen Formschrägen S abgetragen wird. Dadurch wird eine vorbestimmte lichte Weite W zwischen den Bereichen 113 der Formschrägen S eingestellt. Je nach Geometrie der Formschrägen S und Position der Führungsschächte 112 kann durch das Abtragen des Materials in dem Bereich eine vorgegebene, auf die verwendete Bremsscheibe abgestimmte lichte Weite W erreicht werden. Die Einstellung der lichten Weite W erfolgt gemäß der vorliegenden Erfindung in einem einzigen Bearbeitungsschritt, da durch das Abtragen des Materials zur Herstellung der Führungsschächte 112 auch der Materialabtrag im Bereich der Formschrägen S erfolgt. In Abhängigkeit davon, wieviel Material beim Abtragen zur Herstellung der Führungsschächte 112 im Bereich der Formschrägen S stehen bleibt, wird die lichte Weite W bestimmt.

Des weiteren ist es möglich, spezielle Formen der Formschrägen S zu wählen, wodurch genauere Fertigungstoleranzen eingehalten werden können. Beispielsweise ist bei flach zulaufenden Formschrägen S die Varianz der lichten Weite W in dem Aufnahmebereich nur klein. Bei Formschrägen S, die relativ spitz zulaufen, kann eine größere Varianz der lichten Weite W zwischen den Bereichen 113 der Formschrägen S in dem Aufnahmebereich je nach Lage und Höhe der Führungsschächte 112 erreicht werden. Die Erfindung eröffnet also mit einfachen Mitteln allein durch geeignete Formgebung im Bereich der Formschrägen S am Bremsträgerrohling einen vorteilhaften Weg zur Vereinfachung der Herstellung und zur Einsparung von Kosten.

## Patentansprüche

1. Verfahren zum Herstellen eines Bremsträgers (110) für eine Scheibenbremse einer Fahrzeugbremsanlage, wobei der Bremsträger (110) wenigstens einen Führungsschacht (112) zum Führen eines Bremsbelags (140) in einer Führungsrichtung relativ zu einem Aufnahmebereich für eine Bremsscheibe (150) aufweist, wobei das Verfahren die Schritte umfasst:
- Herstellen eines Bremsträgerrohlings in einem Gießschritt, und
- Nachbearbeiten des Bremsträgerrohlings durch Abtragen von Material zum Herstellen des wenigstens einen Führungsschachts (112),
**dadurch gekennzeichnet, dass** der Bremsträgerrohling in dem Gießschritt in dem Bereich, in dem der Führungsschacht (112) ausgebildet wird, mit zwei konvergierenden, dem Aufnahmebereich zugewandten Formschrägen (S) ausgebildet wird, und dass beim Nachbearbeiten zum Herstellen des wenigstens einen Führungsschachts (112) Material im Bereich der Formschrägen (S) abgetragen wird, so dass der Aufnahmebereich für die Bremsscheibe (150) eine vorbestimmte lichte Weite (W) quer zur Führungsrichtung aufweist.

2. Verfahren nach Anspruch 1,
**dadurch gekennzeichnet, dass** in dem Gießschritt eine zumindest zweiteilige Gussform verwendet wird, deren Formhälften (A, B) in einer Formteilungsebene (T) aneinander liegen, wobei die Formteilungsebene (T) in dem Bereich positioniert ist, in dem am Bremsträger (110) der wenigstens eine Führungsschacht (112) ausgebildet wird.

3. Verfahren nach Anspruch 2,
**dadurch gekennzeichnet, dass** die Formteilungsebene (T) im Wesentlichen mittig durch den Bereich verläuft, in dem am Bremsträger (112) der wenigstens eine Führungsschacht (112) ausgebildet wird.

4. Verfahren nach Anspruch 2 oder 3,
**dadurch gekennzeichnet, dass** beidseits der Formteilungsebene (T) jeweils eine Formschräge (S) angeordnet ist.

5. Verfahren nach einem der Ansprüche 2 bis 4,
**dadurch gekennzeichnet, dass** die Formschrägen (S) im Wesentlichen denselben relativen Neigungswinkel bezüglich der Formteilungsebene (T) aufweisen.

6. Verfahren nach einem der Ansprüche 2 bis 5,
**dadurch gekennzeichnet, dass** die Formschrägen (S) unterschiedliche relative Neigungswinkel bezüglich der Formteilungsebene (T) aufweisen.

7. Verfahren nach einem der vorangehenden Ansprüche,
**dadurch gekennzeichnet, dass** der Bremsträgerrohling aus Aluminium, einer Aluminiumlegierung oder aus Sphärogussmaterial hergestellt wird.

8. Verfahren nach einem der vorangehenden Ansprüche,
**dadurch gekennzeichnet, dass** das Abtragen von Material zum Herstellen des wenigstens einen Führungsschachts (112) in einem spanabhebenden Bearbeitungsschritt erfolgt.

9. Verfahren nach einem der vorangehenden Ansprüche,
**dadurch gekennzeichnet, dass** das Abtragen von Material lediglich in Führungsrichtung erfolgt.

10. Bremsträger (110) für eine Scheibenbremse einer Fahrzeugbremsanlage, hergestellt nach dem Verfahren gemäß einem der vorangehenden Ansprüche.

11. Scheibenbremse für eine Fahrzeugbremsanlage mit einem Bremsträger (110) nach Anspruch 10.

## Claims

1. Method for manufacturing a brake carrier (110) for a disc brake of a vehicle brake system, wherein the brake carrier (110) has at least one guiding recess (112) for guiding a brake pad (140) in a guiding direction relative to a receiving region for a brake disc (150), wherein the method comprises the steps:
- manufacturing a brake carrier blank in a casting step, and
- finishing the brake carrier blank by removing material for producing the at least one guiding recess (112),
**characterized in that** the brake carrier blank is formed in the casting step, in the region in which the guiding recess (112) is formed, with two converging shaped chamfers (S) facing the receiving region, and that during finishing for producing the at least one guiding recess (112) material is removed in the region of the shaped chamfers (S) such that the receiving region for the brake disc (150) has a predetermined clear width (W) transversely to the guiding direction.

2. Method according to Claim 1,
**characterized in that** an at least two-part casting mould is used in the casting step, the mould halves (A, B) of which adjoin one another in a mould parting plane (T), wherein the mould parting plane (T) is positioned in the region in which the at least one guiding recess (112) is formed on the brake carrier (110).

3. Method according to Claim 2,
**characterized in that** the mould parting plane (T) runs substantially centrally through the region in which the at least one guiding recess (112) is formed on the brake carrier (112).

4. Method according to Claim 2 or 3,
**characterized in that** on both sides of the mould parting plane (T) in each case one shaped chamfer (S) is arranged.

5. Method according to one of Claims 2 to 4,
**characterized in that** the shaped chamfers (S) have substantially the same relative angle of inclination with respect to the mould parting plane (T).

6. Method according to one of Claims 2 to 5,
**characterized in that** the shaped chamfers (S) have different relative angles of inclination with respect to the mould parting plane (T).

7. Method according to one of the preceding claims,
**characterized in that** the brake carrier blank is produced from aluminium, an aluminium alloy or from spheroidal graphite cast iron material.

8. Method according to one of the preceding claims,
**characterized in that** the removal of material to produce the at least one guiding recess (112) is effected in a chip-removal machining step.

9. Method according to one of the preceding claims,
**characterized in that** the removal of material is effected merely in the guiding direction.

10. Brake carrier (110) for a disc brake of a vehicle brake system, manufactured by the method according to one of the preceding claims.

11. Disc brake for a vehicle brake system having a brake carrier (110) according to Claim 10.

## Revendications

1. Procédé de fabrication d'un support de frein (110) pour un frein à disque d'un système de freinage de véhicule, ce support de frein (110) présentant au moins une gaine de guidage (112) pour guider une garniture de frein (140) dans un sens de guidage par rapport à une zone réceptrice destinée à recevoir un disque de frein (150), ledit procédé comprenant les étapes suivantes :
- la fabrication par moulage d'une ébauche de support de frein
- la transformation de l'ébauche par enlèvement de matériau pour réaliser ladite gaine de guidage (112),
**caractérisé en ce que** lors de l'étape de fabrication par moulage, l'ébauche du support de frein est, dans la zone dans laquelle sera réalisée la gaine de guidage (112), réalisée pourvue de deux dépouilles convergentes tournées vers la zone réceptrice, et **en ce que** du matériau est enlevé dans la zone des dépouilles (S) lors de l'étape de transformation pour réaliser ladite gaine de guidage (112), si bien que la zone réceptrice destinée à recevoir le disque de frein (150) présente perpendiculairement au sens de guidage une largeur (W) intérieure prédéterminée.

2. Procédé selon la revendication 1,
**caractérisé en ce que** le moule utilisé lors de l'étape de fabrication par moulage est un moule en deux parties, dont les moitiés (A, B) sont appliquées l'une contre l'autre dans un plan de division de moule (T), ce plan de division (T) étant positionné dans la zone dans laquelle sera réalisée ladite gaine de guidage (112) sur le support de frein (110).

3. Procédé selon la revendication 2,
**caractérisé en ce que** le plan de division de moule (T) passe sensiblement par le milieu de la zone dans laquelle sera réalisée ladite gaine de guidage (112) sur le support de frein (112).

4. Procédé selon la revendication 2 ou 3,
**caractérisé en ce qu'**une dépouille (S) est respectivement disposée de part et d'autre du plan de division de moule (T).

5. Procédé selon l'une des revendications 2 à 4,
**caractérisé en ce que** les dépouilles (S) présentent sensiblement le même angle d'inclinaison relatif par rapport au plan de division de moule (T).

6. Procédé selon l'une des revendications 2 à 5,
**caractérisé en ce que** les dépouilles (S) présentent des angles d'inclinaison relatifs différents par rapport au plan de division de moule (T).

7. Procédé selon l'une des revendications précédentes,
**caractérisé en ce que** l'ébauche du support de frein est fabriquée à partir d'aluminium, d'un alliage d'aluminium ou de fonte sphéroïdale.

8. Procédé selon l'une des revendications précédentes,
**caractérisé en ce que** l'enlèvement de matériau pour fabriquer ladite gaine de guidage (112) est effectuée lors d'une passe de transformation par enlèvement de copeaux.

9. Procédé selon l'une des revendications précédentes,
**caractérisé en ce que** l'enlèvement de matériau est effectué uniquement dans le sens du guidage.

10. Support de frein (110) pour un frein à disque d'un système de freinage de véhicule, fabriqué à partir du procédé selon l'une des revendications précédentes.

11. Frein à disque pour un système de freinage de véhicule muni d'un support de frein (110) selon la revendication 10.
